Europäisches Patentamt

European Patent Office

Office européen des brevets

(11) Veröffentlichungsnummer: **0 431 414 B1**

(12) **EUROPÄISCHE PATENTSCHRIFT**

(45) Veröffentlichungstag der Patentschrift: **06.04.94**

(21) Anmeldenummer: **90122368.5**

(22) Anmeldetag: **23.11.90**

(51) Int. Cl.5: **C08G 18/32**, C08G 18/40, C08G 18/70, C08G 18/76

(54) **Heisshärtbare Polyether -Polyester-Polyurethanharnstoffe.**

(30) Priorität: **06.12.89 DE 3940273**

(43) Veröffentlichungstag der Anmeldung:
**12.06.91 Patentblatt 91/24**

(45) Bekanntmachung des Hinweises auf die
Patenterteilung:
**06.04.94 Patentblatt 94/14**

(84) Benannte Vertragsstaaten:
**AT BE CH DE ES FR GB IT LI NL SE**

(56) Entgegenhaltungen:
**EP-A- 0 017 111**
**EP-A- 0 062 204**
**EP-A- 0 153 579**
**EP-A- 0 219 035**

(73) Patentinhaber: **BAYER AG**

**D-51368 Leverkusen(DE)**

(72) Erfinder: **Grögler, Gerhard, Dr.**
**von Diergardtstrasse 48**
**W-5090 Leverkusen 1(DE)**
Erfinder: **Kopp, Richard, Dr.**
**Bilharzstrasse 15**
**W-5000 Köln 80(DE)**
Erfinder: **Hess, Heinrich, Dr.**
**Auf der Schildwache 13a**
**W-5000 Köln 80(DE)**
Erfinder: **Hänsel, Eduard, Dr.**
**Espenstrasse 2**
**W-5600 Wuppertal 1(DE)**
Erfinder: **Scholl, Thomas, Dr.**
**Elbingerstrasse 33**
**W-4005 Meerbusch 2(DE)**

**Beschreibung**

Die vorliegende Erfindung betrifft wärmehärtbare Reaktivsysteme, bestehend aus miteinander nicht homogen mischbaren Polyethern und Polyestern, gegebenenfalls OH- und/oder $NH_2$-terminierten niedermolekularen Kettenverlängerern, gegebenenfalls üblichen Hilfsstoffen und einem Feststoff-Polyisocynaat mit einem Schmelzpunkt oberhalb von 80°C, bei denen die Polyesterkomponente im Gemisch in fester Form (Pulver, Granulat) vorliegt.

Polyurethane auf Basis von Polyoxyalkylenethern zeigen bekanntlich ein schwächeres mechanisches Werteniveau als solche auf Polyesterbasis. Bei den Polyesterurethanen treten wegen der vorhandenen polaren Gruppierungen zusätzliche zwischenmolekulare Nebenvalenz-Bindungskräfte auf. Eine Folge davon ist auch die bei vielen Polyestern sich zeigende Kristallinität, die letzthin die Güte des Endproduktes mitbeeinflußt. So verhalten sich Polyester bzw. Polyesterurethane auch in der Hitze oder Kälte vielfach anders als Polyether-Systeme. Polyesterpolyurethane werden als hochwertige Produkte insbesondere in solchen technischen Bereichen eingesetzt, wo hohe mechanische Ansprüche gestellt werden.

Der Hauptanteil aller Polyurethane basiert dennoch auf Polyether. Durch zahlreiche Modifizierungsmöglichkeiten können Polyether "veredelt" werden, so daß die resultierenden Endprodukte auch höheren Praxisanfoderungen genügen. Als wichtiger Faktor kommt hinzu, daß Polyether im allgemeinen bei Raumtemperatur flüssig und somit beträchtlich besser verarbeitbar sind als z.B. feste Polyester. Die weiteren Vor- und Nachteile beider hochmolekularen Substanzklassen sind dem Fachmann bekannt. Es hat nicht an Versuchen gefehlt, die Polyether- bzw. Polyester-spezifischen Nachteile durch Zusatz von Polyestern bzw. Polyethern zu beheben oder zumindest zu verringern. Leider sind viele Polyether und Polyester infolge ihrer verschiedenen Struktureinheiten miteinander völlig unverträglich. Man erhält nach Mischung beider Komponenten Emulsionen oder Suspensionen, die sich sehr rasch in 2 Phasen auftrennen. Dies ist inbesondere der Fall, wenn Polyester auf Basis von z.B. Adipinsäure und Ethylenglykol oder Butandiol (1,4) verwendet werden.

Diese handelsüblichen und preiswerten Polyester ergeben in Kombination mit Kettenverlängerern und Polyisocyanaten besonders hochwertige Elastomere. Die Verarbeitung eines Zweiphasensystems gestaltet sich technisch schwierig. Auch mit Hilfe geeigneter Maßnahmen (z.B. spezielle Rührwerke) können Dosierungsfehler auftreten. Darüberhinaus erfolgt auch nach Zugabe des Polyisocyanates während der Verfestigung eine Phasentrennung. Diese mehr oder weniger ausgeprägten Phasen reagieren zwar nach längerer Reaktionszeit mit dem Isocyanat. Eine homogene Durchreaktion bleibt jedoch vielfach aus. Da die Polyester im allgemeinen deutlich reaktiver als die Polyether sind, treten Vorreaktionen ein. Der träger abreagierende Polyether kann oftmals als "schmierige Schicht" auf der Oberfläche der Formteile erscheinen. Durch Verwendung geeigneter Katalysatoren kann die Polyaddition beschleunigt werden. Infolge der raschen Viskositätserhöhung wird jedoch die "Topfzeit" der Reaktionsansätze beeinflußt, so daß eine Verarbeitung im Gießverfahren nicht mehr möglich ist. Es wurde nun überraschenderweise gefunden, daß oben erwähnte Nachteile nicht auftreten, wenn man als Polyesterkomponente einen bei Raumtemperatur festen, pulverförmigen Polyester im Polyether suspendiert.

Sehr vorteilhaft ist es, wenn das Feststoffisocyanat in Gegenwart des Polyethers mit einer genügenden Menge eines aliphatischen Diamins "desaktiviert" wird. Durch Reaktion des aliphatischen Diamins auf der Oberfläche der Isocyanatteilchen bildet sich eine dünne Polyharnstoffhülle, die als Diffusionssperrschicht wirkt. In der Hitze wird diese Hülle zerstört. Danach reagieren die Komponenten rasch miteinander ab. Dieses Verfahren ist z.B. in der US-PS 4 483 974 beschrieben. Man erhält Einkomponenten-Systeme, die zu einem beliebigen Zeitpunkt in einem Temperaturbereich von 100-150°C zur Verfestigung gebracht werden können Im allgemeinen wird so verfahren, daß man in einem beliebigen bei Raumtemperatur flüssigen Polyetherpolyol mit einem Molekulargewicht zwischen 400 und 6.000 die gewünschte Menge eines bei Raumtemperatur festen Polyesters mit einem Molekulargewicht zwischen 400 und 20.000 in Form eines Pulvers oder feinkörnigen Granulats zusetzt und diese Mischung mittels eines Rührwerkes gut homogenisiert. Es empfiehlt sich, nunmehr eine geringe Menge eines aliphatischen Diamins der Suspension zuzugeben. Dieses bewirkt bei dem anschließenden Zusatz des Feststoff-Isocyanates die Bildung der Diffusionssperrschicht auf der Teilchenoberfläche.

Man kann das Polyesterpulver auch mit der Gesamtmenge des Feststoffisocyanates extern vermischen und dieses Gemisch zu einem späteren Zeitpunkt dem Polyether zugeben. Der Polyether kann gegebenenfalls wenig aliphatisches Diamin als Diffusionssperrschicht-Bildner sowie OH- oder $NH_2$-terminierte niedermolekulare Kettenverlängerer und sonstige Hilfsstoffe, z.B. Katalysatoren, enthalten. Alle NCO-reaktiven Komponenten sind in der NCO-Bilanz zu berücksichtigen.

Die so erhaltenen Suspensionen sind je nach Menge der zugesetzten Feststoffe gießbar, streichbar oder pastenartig. Die Verfestigung der Ansätze erfolgt in der Wärme. Hierbei macht man die überraschende Beobachtung, daß es nicht zu einer Trennung der an sich unverträglichen Polyether und Polyester kommt. Nach rascher Verfestigung erhält man vielmehr homogen ausgehärtete Formkörper mit "trockener Oberfläche".

Die mikroskopische Untersuchung dünner Filme zeigt, daß die PUR-Matrix je nach Polyether- oder Polyester-Anteil aus einem Polyether-Urethan oder einem Polyester-Urethan besteht. Beim Vorliegen einer Matrix aus Polyether-Urethan beobachtet man, daß das Polyester-Urethan in Form kleiner Kugeln (1-5 $\mu$m) gleichmäßig in der Polyether-Urethan-Grundmassevorliegt. Bei Dehnungsbeanspruchung werden diese Kugeln in Richtung der angelegten Kraft länglich deformiert. Nach Entlastung stellt sich die Ausgangsposition wieder ein.

Gegenstand der Erfindung sind also

1. Gemische bestehend aus

A. festen Polyisocyanaten mit Schmelzpunkten oberhalb 80°C, die gegebenenfalls desaktiviert sind,

B. linearen oder verzweigten und bei Raumtemperatur flüssigen OH- und/oder NH$_2$-Endgruppen enthaltenden Polyoxyalkylenethern, mit Molekulargewichten zwischen 400 und 10.000, bevorzugt 1.000-6.000,

C. linearen oder verzweigten und bei Raumtemperatur festen OH- und/oder NH$_2$-Endgruppen enthaltenden Polyestern mit Molekulargewichten zwischen 400 und 20.000, bevorzugt 1.000 und 6.000,

D. gegebenenfalls OH- und oder NH$_2$-Gruppen enthaltenden niedermolekularen Kettenverlängeren vom Molekulargewicht 62-399,

E. gegebenenfalls in der PUR-Chemie üblichen Katalysatoren und anderen Hilfsstoffen,

dadurch gekennzeichnet, daß die bei Raumtemperatur feste, in Form von feinteiligen Pulvern in Teilchengrößen von 10 bis 200 $\mu$m, vorzugsweise 20 bis 100 $\mu$m, vorliegende Polyesterkomponente (C) mit dem Polyether (B) nicht homogen (einphasig) mischbar ist.

In den erfindungsgemäßen Zusammensetzungen sind Isocyanate und Amine bzw. Polyole in solchen Mengen enthalten, daS eine Kennzahl von 50 bis 200, vorzugsweise 90 bis 135, eingehalten wird.

Als feste Polyisocyanate kommen solche in Frage, die einen Schmelspunkt über 80°C aufweisen, z,B, 1,5-Naphthalin-diisocyanat, dimeres 4,4'-Diisocyanatodiphenylmethan, dimeres 2,4-Diisocyanatotoluol, 3,3'-Diisocyanato-4,4'-dimethyl-N,N'-diphenylharnstoff und N,N'-Bis[4(4- oder 2-isocyanatophenylmethyl)phenyl]-harnstoff. Besonders bevorzugt sind dimeres 2,4-Diisocyanatotoluol und 3,3'-Diisocyanato-4,4'-dimethyl-N,N'-diphenylharnstoff mit einer Teilchengröße von 0,1 bis 150, vorzugsweise 1 -20 $\mu$m.

Die Polyisocyanate werden gegebenenfalls durch Einwirkung von aliphatischen Polyaminen mit Molekulargewichten von 32-399 und gegebenenfalls durch Einwirkung von aliphatischen Polyaminen mit Molekulargewichten von 400 bis 8000 "desaktiviert" (stabilisiert). Als Beispiele für derartige Polyamine seien genannt: Ethylendiamin, 1-Amino-3,3,5-trimethyl-5-aminomethyl-cyclohexan, 3,3'-Dimethyl-4,4'-diaminodicyclohexylmethan, Diethylentriamin, Methylnonandiamin.

Als Stabilisatoren kommen z.B. ferner in Frage: Hydrazin, zumeist in Form von Hydrazinhydrat, C$_1$-C$_6$-alkylsubstituierte Hydrazine, z.B. Methylhydrazin, Ethylhydrazin, Hydroxyethyl-hydrazin oder N,N'-Dimethylhydrazin, Verbindungen mit Hydrazid-Endgruppen wie z.B. Carbodihydrazid, Ethylen-bis-carbazinester, $\beta$-Semi-carbazido-propionsäurehydrazid oder Isophoron-bis-semi-carbazid. Weitere Desaktivierungsmittel sind in den DE-OS 3 230 757 und 3 112 054 aufgezählt.

Als Stabilisatoren für die Isocyanatkomponente können auch offenkettige, mono- oder bicyclische Amidine bzw. Guanidine, welche keine gegenüber Isocyanaten reaktiven Wasserstoffatome aufweisen, verwendet werden. Als Beispiele für derartige Verbindungen seien genannt: Tetramethylguanidin, Pentamethylguanidin, 1,2-Dimethyl-tetrahydropyrimidin, 1,8-Diaza-bicyclo[5,4,0]-undec-7-en, 1,5-Diaza-bicyclo[4,3,0]-non-5-en. Weitere Beispiele für derartige Amidine sind in der DE-OS 3 403 500 aufgeführt.

Die erfindungsgemäß zu verwendenden, bei Raumtemperatur festen, Hydroxylgruppen und gegebenenfalls freie Carboxylgruppen aufweisenden Polyester-Komponenten mit Molekulargewichten von 400 bis 20.000 und Erweichungspunkten von 40° bis 150°C, vorzugsweise 40 bis 130°C, können 2 bis 8, vorzugsweise aber 2 bis 4 OH-Gruppen aufweisen. Besonders bevorzugt sind die verzweigten Polyester mit 2,1 bis 4 OH-Gruppen. Die Produkte werden hergestellt durch Polykondensation von Hydroxycarbonsäuren oder durch Polymerisation ihrer Lactone, gegebenenfalls in Gegenwart von Verzweigern (mehrwertige Alkohole und/oder Carbonsäuren). Beispiele hierfür sind Hydroxycapronsäure und Caprolacton. Die Produkte können auch hergestellt werden durch Umsetzung von zweiwertigen oder mehrwertigen, z.B. drei- oder vierwertigen Alkoholen mit 2- oder mehrwertigen Carbonsäuren.

Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt: Bernsteinsäure, Adipinsäure, Korksäure, Azelainsäure, Sebazinsäure, Dodecandisäure, Diglykolsäure, Phthalsäure, Isophthalsäure, Hexahydrophthalsäure, Phthalsäuroanhydrid, Tetrahydrophthalsäureanhydrid, Hexahydrophthalsäureanhydrid, Tetrachlorphthalsäureanhydrid, Terephthalsäure, Glutarsäure, Glutarsäureanhydrid, Maleinsäure, Maleinsäureanhydrid, Fumarsäure, Trimellitsäure, Pyromellitsäure, dimerisierte und trimerisierte ungesättigte Fettsäure, dimerisierte ungesättigte Fettsäuren wie z.B. Ölsäure, Terephthalsäuredimethylester, Terephthalsäurebis-glykolester, Zitronensäure, Endomethylentetrahydrophthalsäureanhydrid.

Als mehrwertige Alkohole können z.B. Ethylenglykol, Diethylenglykol, Triethylenglykol, Propylenglykol-(1,2) und -(1,3), Dipropylenglykol, Butylenglykol-(1,4) und -(2,3), Hexandiol-(1,6), Octandiol-(1,8), Neopentylglykol, 1,4-Bis-hydroxymethyl-cyclohexan, 2-Methyl-1,3-propandiol, Glycerin, Trimethylolpropan, Hexantriol-(1,2,6), Butantriol-(1,2,4), Trimethylolethan, Pentaerythrit, Tricyclododecandiol, Hydrochinon-bis-hydroxyethylether, 2,2-Bis-hydroxyphenylpropan-bis-hydroxyethylether, Chinit, Mannit und Sorbit, Formit und Methylglykosid verwendet werden.

Zur Herstollung von höhermolekularen Polyestern mit Molekulargewichten zwischen 5.000 und 20.000, vorzugsweise mit Erweichungspunkten (Ring und Kugel) zwischen 70 und 150°C werden, bezogen auf die Polycarbonsäurekomponente, 20-70 Mol % Terephthalsäure bzw. Isophthalsäure verwendet.

Zur Herstellung von weniger hochmolekularen Polyestern mit Molekulargewichten zwischen 400 und 5.000 und mit Erweichungspunkten zwischen 40 und 100°C werden auch alle übrigen Polycarbonsäuren, z.B. insbesondere Adipinsäure, in beliebigen Mengenverhältnissen, bezogen auf die Polycarbonsäurekomponente, verwendet. Die Herstellung derartiger Polyester ist bekannter Stand der Technik und z.B. in Houben-Weyl, Methoden der organische Chemie, Band 14/2, Thieme-Verlag, Stuttgart, 1961, beschrieben.

Erfindungsgemäß zu verwendende Polyesterkomponenten sind auch solche mit aliphatischen oder aromatischen Amino-Endgruppen, wie sie durch Hydrolyse von entsprechenden NCO-Prepolymeren auf der Basis von höhermolekularen Polyhydroxylverbindungen und überschüssigen aliphatischen oder aromatischen Diisocyanaten durch (vorzugsweise basische) Hydrolyse hergestellt werden können. Beispiele für dieses Verfahren werden in der DE-OS 2 948 419, DE-OS 3 039 600, DE-OS 3 112 118, der EP-A-61 627, EP-A-71 132 und EP-A-71 139 angegeben. In der erstgenannten Patentschrift werden auch weitere Verfahren des Standes der Technik zur Herstellung von Aminoverbindungen höhermolekularer Struktur genannt. Es handelt sich bei dem Verfahren nach DE-OS 2 948 419 und den anderen zitierten Patentschriften neben Polyether-Aminen auch um Polyester-, Polyacetal-, Polythioether- oder Polycaprolacton-Polyamine, vorzugsweise 2-oder 3-funktionelle Polyamlne, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die aromatischen, höhermolekularen Polyamine können jedoch auch nach anderen Verfahren, z.B. durch Umsetzung von NCO-Prepolymeren mit überschüssigen Mengen an Hydrazin, Aminophenylethylamin, oder anderen Diaminen entsprechend DE-AS 1 694 152 hergestellt werden; eine andere Synthesemöglichkeit beschreibt die FR-PS 1 415 317 durch Überführung der NCO-Prepolymere mit Ameisensäure in die N-Formylderivate und deren Verseifung. Auch die Umsetzung von NCO-Prepolymeren mit Sulfaminsäure gemäß DE-AS 1 155 907 führt zu höhermolekularen Polyaminen.

Als NCO-reaktives Suspendiermedium für die festen, stabilisierten Polyisocyanate und die festen pulverförmigen Polyester werden z.B. flüssige nieder- und/oder höhermolekulare Polyole und/oder Polyamine verwendet.

Als höhermolekulare Polyole vom Molekulargewicht 400 bis 10.000 können die mindestens zwei, vorzugsweise 2 bis 4, Hydroxylgruppen und in der Regel ein Molekulargewicht von 400-8.000 aufweisenden Polyether und Polythioether, wie sie für die Herstellung von homogenen und von zellförmigen Polyurethanen an sich bekannt sind, verwendet werden. Beispiele hierfür sind z.B. ausführlich in der DE-OS 2 920 501, DE-OS 2 854 384 und der DE-OS 3 230 757 aufgeführt.

Auch bereits Urethan- oder Harnstoffgruppen enthaltende Polyhydroxylverbindungen sowie gegebenenfalls modifizierte, natürliche Polyole, wie Rizinusöl, Kohlenhydrate oder Stärke, sind verwendbar. Auch Anlagerungsprodukte von Alkylenoxiden an Phenol-Formaldehyd-Harze bzw. an Harnstoff-Formaldehydharze können im erfindungsgemäßen Verfahren eingesetzt werden.

Auch Hydroxylendgruppen aufweisenda Polybutadiene sind erfindungsgemäß geeignet, da sie besonders elastische und hydrolysenstabile Produkte ergeben. Es können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind.

Polyaddukthaltige Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in o.g., Hydroxylgruppen aufweisenden Verbindungen, ablaufen läßt.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44 und 54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, und in der DE-OS 2 854 384 und 2 920 501 beschrieben.

Geeignete Polyole sind auch hydroxylgruppenhaltige Polymerisate, beispielsweise Copolymerisate aus olefinisch ungesättigten Monomeren und olefinisch ungesättigten Monomeren mit aktivem Wasserstoff. Sie werden beispielsweise in der EP-A 62 780, Seite 5 und deren Beispielen beschrieben. Sie finden vorzugsweise Anwendung für Dichtungs-, Füll-, Kleb- oder Unterbodenschutzmassen.

Selbstverständlich können Mischungen der obengenannten Verbindungen mit mindestens zwei gegenüber Isocyanaten reaktionsfähigen Wasserstoffatomen eingesetzt werden.

Als in den Suspensionen gegebenenfalls enthaltene Polyole kommen auch niedermolekulare Kettenverlängerer oder Vernetzer in Frage. Bei diesen Kettenverlängerern oder Vernetzern handelt es sich insbesondere um mindestens zweifunktionelle Verbindungen, welche an aliphatische und/oder cycloaliphatische Gruppen gebundene Hydroxylgruppen und Molekulargewichte zwischen 62 und 399 aufweisen. Bevorzugt sind dabei niedermolekulare Diole mit an aliphatische oder cycloaliphatische Gruppen gebundenen Hydroxylgruppen des Molekulargewichtsbereichs 62 bis 399.

Diese Verbindungen weisen in der Regel 2 bis 8, vorzugsweise 2 bis 4, besonders bevorzugt jedoch 2, Hydroxylgruppen auf. Es können selbstverständlich auch Mischungen von verschiedenen Verbindungen verwendet werden. Als Beispiele für derartige Verbindungen seien genannt: Ethylenglykol, Diethylenglykol, Triethylenglykol, Tetraethylenglykol, Trimethylenglykol, Butandiol-2,3 und/oder -1,4, Pentandiol-1,5, Hexandiol-1,6, Neopentylglykol, 1,4-Bis-hydroxyethyl-cyclohexan, 1,4-Dihydroxycyclohexan, Terephthalsäure-bis-(β-hydroxyethyl)ester, 1,4,3,6-Dianhydrohexite, 1,4-Monoanhydrotetrite, Propylenglykol, Dipropylenglykol, Tripropylenglykol, Tetrapropylenglykol, Bis-2-hydroxyethyl-hydrochinon, Bis-(2-hydroxyethyl)-resorcin. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl sowie Formose oder Formit.

Ferner sind geeignet tertiäraminhaltige Di- oder Polyole, z.B. N-Methyldiethanolamin, Triethanolamin oder N,N'-Bis-hydroxyethylpiperazin.

Es sind auch Diole mit zusätzlichen Gruppen einsetzbar, z.B. Adipinsäure-bis-(2-hydroxyethyl)-ester, Terephthalsäure-bis-(2-hydroxyethyl)-ester, Diol-urethane, Diol-harnstoffe oder Polyole, welche Sulfonat- und/oder Phosphonatgruppen enthalten, z.B. 1,6-Hexamethylen-bis-(2-hydroxyethylurethan), 4,4'-Diphenylmethan-bis-(2-hydroxyethylharnstoff) oder das Addukt von Na-Bisulfit an Butandiol-1,4, bzw. dessen Alkoxylierungsprodukte. Weitere niedermolekulare Verbindungen werden ausführlich in der DE-A 2 854 384 beschrieben.

Die obengenannten nieder- und höhermolekularen Polyole können gegebenenfalls durch Vorreaktion mit einem Unterschuß Polyisocyanat modifiziert sein.

Als Polyisocyanate kommen hierfür aliphatische, cycloaliphatische, araliphatische, aromatische und/oder heterocyclische Polyisocyanate in Betracht, wie sie z.B. in der DE-OS 2 920 501 (S. 12 bis 16) aufgeführt sind.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), 4,4'- und/oder 2,4'-Diphenylmethan-diisocyanat, 1,6-Hexamethylendiisocyanat, 1-Isocyanato-3,3,5-trimethyl-5-isocyanatomethyl-cyclohexan, Perhydro-2,4'- und/oder -4,4'-diphenylmethan-diisocyanat.

Als NCO-reaktives Suspendiermedium für die festen, stabilisierten Polyisocyanate und die festen pulverförmigen Polyester können auch flüssige nieder- und/oder höhermolekulare, aromatische und/oder aliphatische Polyamine verwendet werden.

Bevorzugt werden höhermolekulare aliphatische und/oder höher- oder niedermolekulare aromatische Polyamine. Niedermolekulare aliphatische Polyamine sind als Stabilisatoren darin höchstens in untergeordneten Mengen enthalten. Größere Mengen freier niedermolekularer aliphatischer Polyamine würden eine Überstabilisierung bewirken. Nur in Form von Polyharnstoffen chemisch gebundene niedermolekulare aliphatische Polyamine dürfen in größeren Mengen enthalten sein.

Als höhermolekulare Polyaminoverbindungen mit aromatischen Aminogruppen mit einem Molekulargewichtsbereich von 400 bis 8000 werden insbesondere solche Polyaminoverbindungen eingesetzt, wie sie durch Hydrolyse von entsprechenden NCO-Prepolymeren auf der Basis von höhermolekularen Polyhydroxylverbindungen und überschüssigen aromatischen Diisocyanaten durch (vorzugsweise basische) Hydrolyse hergestellt werden können. Beispiele für dieses Verfahren werden in der DE-OS 2 948 419, DE-OS 3 039 600, DE-OS 3 112 118, der EP-A-61 627, EP-A-71 132 und EP-A-71 139 angegeben. In der erstgenannten Patentschrift werden auch weitere Verfahren des Standes der Technik zur Herstellung von aromatischen Aminoverbindungen höhermolekularer Struktur genannt. Es handelt sich bei dem Verfahren nach DE-OS 2 948 419 und den anderen zitierten Patentschriften vorzugsweise um Polyether-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die aromatischen, höhermolekularen Polyamine können jedoch auch nach anderen Verfahren, z.B. durch Umsetzung von NCO-Prepolymeren mit überschüssigen Mengen an Hydrazin, Aminophenylethylamin, oder anderen Diaminen entsprechend DE-AS 1 694 152 hergestellt werden; eine andere Synthesemöglichkeit beschreibt die FR-PS 1 415 317 durch Überführung der NCO-Prepolymere mit Ameisensäure in die N-Formylderivate und deren Verseifung. Auch die Umsetzung von NCO-Prepolymeren mit Sulfaminsäure gemäß DE-AS 1 155 907 führt zu höhermolekularen Polyaminen.

Als höhermolekulare Polyaminoverbindungen mit aliphatischen Aminogruppen mit einem Molekulargewichtsbereich von 400 bis 8000, vorzugsweise von 1000 bis 4000 werden z.B. solche eingesetzt, wie sie durch reduktive Aminierung von Polyoxyalkylenglykolen mit Ammoniak nach BE-PS 634 741 und US-PS 3 654 370 erhalten werden. Weitere höhermolekulare Polyoxyalkylen-Polyamine können nach Methoden, wie sie in der Firmenschrift "Jeffamine, Polyoxypropylene Amines" von Texaco Chemical Co., 1978, aufgezählt werden, hergestellt werden, beispielsweise durch Hydrierung von cyanethylierten Polyoxypropylenglykolen (DE-OS 1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-OS 2 546 536. Geeignete höhermolekulare aliphatische Di- und Polyamine sind auch die nach DE-OS 29 48 419, DE-OS 3 039 600, DE-OS 3 112 118, der EP-A 61 627, EP-A 71 132 und EP-A 71 139 durch alkalische Hydrolyse von NCO-Prepolymeren (mit aliphatischen Diisocyanaten) mit Basen über die Carbamatstufe zugänglichen Polyamine.

Es handelt sich bei dem Verfahren nach DE-OS 2 948 419 und den anderen zitierten Literaturstellen vorzugsweise um Polyester-Polyamine oder Polythioether-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die höhermolekularen Polyamine können jedoch auch nach anderen Verfahren, z.B. durch Umsetzung von NCO-Prepolymeren mit überschüssigen Mengen an Diaminen entsprechend DE-AS 1 694 152 hergestellt werden; eine andere Synthesemöglichkeit beschreibt die FR-PS 1 415 317 durch Überführung der NCO-Prepolymere mit Ameisensäure in die N-Formylderivate und deren Verseifung.

Diese höhermolekularen, aliphatischen Polyamine können sowohl als Stabilisatoren für die Polyisocyanatkomponente als auch als weitere als Suspendiermedium dienende Komponente Verwendung finden.

Als Kettenverlängerer können niedermolekulare aromatische Diamine des Molekulargewichtsbereiches 108 bis 399 eingesetzt werden. Unter aromatischen Polyaminen sollen auch solche Amine verstanden werden, welche die Aminogruppe an heterocyclische Reste mit aromatischem Charakter gebunden enthalten. Als aromatische Polyamine sind z.B. geeignet: p-Phenylendiamin, 2,4-/2,6-Toluylendiamine, Diphenylmethan-4,4'- und/oder -2,4'- und/oder -2,2'-diamine, 3,3'-Dichlor-4,4'-diaminodiphenylmethan, 3-($C_1$-$C_8$)-Alkyl-4,4'-diaminodiphenylmethane, die 3,3'-Di-($C_1$-$C_4$)-4,4'-diaminodiphenylmethane sowie die 3,3',5,5'-Tetra-($C_1$-$C_4$)-alkyl-4,4'-diphenylmethane, die 4,4'-Diaminodiphenyl-sulfide, -sulfoxide oder -sulfone, Ethergruppen aufweisende Diamine gemäß DE-A 1 770 525 und 1 809 172 (US-PS 3 654 364 und 3 736 295), gegebenenfalls in 5-Stellung substituierte 2-Halogen-1,3-phenylendiamine (DE-A 2 001 772, 2 025 896 und 2 065 869), Bisanthranilsäureester (DE-A 2 040 644 und 2 160 590), 2,4-Diaminobenzoesäureester nach DE-A 2 025 900, sowie durch eine oder zwei ($C_1$-$C_4$)-Alkylgruppen substituierte Toluylendiamine. Besonders bevorzugt sind 3,5-Diethyl-2,4- und/oder -2,6-diaminotoluol (besonders ihre technischen (80/20)- oder (65/35)-Isomerengemische), unsymmetrisch tetraalkylsubstituierte Diaminodiphenylmethane, z.B. 3,5-Diethyl-3'-5'-diisopropyl-4,4'-diaminodiphenylmethan und ihre Isomerengemische entsprechend DE-A 2 902 090, 4,4'-Diaminobenzanilid sowie 3,5-Diaminobenzoesäure-($C_1$-$C_4$)-alkylester, 4,4'- und/oder 2,4'-Diamino-diphenylmethan, sowie Naphthylen-1,5-diamin.

Es ist selbstverständlich möglich, Mischungen der obengenannten Polyhydroxylverbindungen und Polyaminoverbindungen einzusetzen.

Gegebenenfalls können die üblichen Polyurethankatalysatoren, mit besonders gutem Effekt tertiäre Amine oder Metallkatalysatoren, verwendet werden.

Es sind dies z.B. tertiäre Amine, wie Triethylamin, Tributylamin, N,N,N',N'-Tetramethyl-ethylendiamin, 1,4-Diaza-bicyclo-(2,2,2)-octan, N,N-Dimethylbenzylamin, N,N-Dimethylcyclohexylamin.

Als organische Metallverbindungen kommen insbesondere organische Zinnverbindungen und Bleiverbindungen als Katalysatoren in Frage. Als organische Zinnverbindungen kommen vorzugsweise Zinn(II)-salze von Carbonsäuren wie Zinn(II)-ethylhexoat und Zinn(II)-stearat und die Dialkylzinnsalze von Carbonsäuren, wie z.B. Dibutylzinndilaurat oder Dioctylzinndiacetat in Betracht.

Als organische Bleiverbindungen kommen vorzugsweise Blei(II)-salze von Carbonsäuren wie Blei(II)-naphthenat, Blei(II)-ethylhexoat, Blei(II)-stearat, aber auch z.B. Blei(II)-bis-diethyldithiocarbamat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Hochtlen, Carl-Hanser-Verlag, München 1966, z.B. auf den Seiten 96 bis 102, und in der DE-A 3 230 757 beschrieben.

Die Katalysatoren werden in der Regel in einer Menge zwischen etwa 0,001 und 10 Gew.-%, bezogen auf die Gesamtzusammensetzung eingesetzt.

Als gegebenenfalls enthaltene in der Regel anorganische Hilfs- und Zusatzstoffe seien genannt: Farbstoffe oder Pigmente, Füllstoffe wie Schwerspat, Kreide, Quarzmehl, Kieselgur, Silicagel, Fällungskieselsäuren, pyrogene Kieselsäuren, Gips, Talkum, Aktivkohle, Ruß, Metallpulver.

Es können ferner auch Reaktivverzögerer, z.B. sauer reagierende Stoffe wie Salzsäure, organische Säurehalogenide oder organische Säuren, ferner Flammschutzmittel der an sich bekannten Art, z.B. Trischlorethylphosphat oder Ammoniumphosphat und -polyphosphat, sowie Stabilisatoren gegen Alterungs- und Witterungseinflüsse wie phenolische Antioxidantien und Lichtschutzmittel, Weichmacher und fungistatische und/oder bakteriostatisch wirkende Substanzen mitverwendet werden.

Als Füllstoffe sind z.B. Fasermaterialien, d.h. alle an sich bekannten, faserförmigen Verstärkungsmaterialien einsetzbar, z.B. Glasfasern oder Fasermaterialien, die von einem organischen Polymeren stammen, z.B. von einem Polyester wie Polyethylenterephthalat, oder vorzugsweise aromatischen Polyamiden, wie dem m-Phenylen-/Isophthalsäurepolyamid, oder dem Poly-p-phenylen-terephthalamid, oder auch Polycaprolactam. Diese Fasermaterialien können auch als Matte, Band, durchgehende Fasern, Vlies, Stoff oder als Stapelfaserwirrgemisch vorliegen. Bevorzugt sind Glasfasern, die mit Schlichten ausgerüstet sind, um den Fasern eine Affinität zu Polyurethanen zu verleihen. Die einzubauende Füllstoffmenge hängt von der gewünschten Verbesserung der mechanischen Eigenschaften ab, im allgemeinen werden 5 bis 60 Gew.-% Fasermaterial angewendet.

Sollen nach dem erfindungsgemäßen Verfahren zellige Polyurethane hergestellt werden, dann werden Wasser und/oder leicht flüchtige organische Substanzen als Treibmittel mitverwendet. Als organische Treibmittel kommen z.B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage.

Weitere Beispiele für Treibmittel sowie Einzelheiten über die Verwendung von Treibmitteln sind im Kunststoff-Handbuch, Band VII, herausgegeben von Vieweg und Höchtlen, Carl Hanser Verlag, München 1966, z.B. auf den Seiten 108 und 109, 453 und 455 und 507 bis 510 beschrieben.

Es können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Es können ferner Zellregler der an sich bekannten Art wie Paraffine oder Fettalkohole oder Dimethylpolysiloxane sowie Pigmente oder Farbstoffe mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 und in den DE-OSen 2 854 384 und 2 920 501 beschrieben.

Die erfindungsgemäßen PUR-Reaktivmischungen können Verwendung finden zur Herstellung von Elastomer-Formteilen, von Klebstoffen, Dichtungs- und Beschichtungsmassen.

Je nach Viskosität und Schmelzverhalten der Ausgangskomponenten und je nach Mengenverhältnis von festen pulverförmigen zu flüssigen Bestandteilen erhält man bei Raumtemperatur gießbare, rakelfähige oder streichbare PUR-Reaktivmischungen. Diese Reaktivmischungen sind Suspensionen eines festen, durch Polyadduktumhüllung stabilisierten Polyisocyanats in der Polyol- und gegebenenfalls Polyamin-Komponente. Die Verfestigung dieser Mischungen erfolgt durch Hitzeeinwirkung. Die Verarbeitung der erfindungsgemäßen Systeme richtet sich nach deren Beschaffenheit und der technischen Aufgabenstellung. Sie können z.B. mit der Hand oder über eine geeignete Auspreß-bzw. Fördereinrichtung, z.B. über eine Kartusche oder eine Rakel auf gewünschte Unterlagen, z.B. blanke oder vorbeschichtete Metalle oder deren Legierungen untereinander, auf Kunststoffteile, auf die verschiedensten technischen Artikel aus Metall, Glas, Keramik oder Kunststoffen, die z.B. auch faserverstärkt sein können auch z.B. textile Unterlagen wie z.B. Vliese, Gewirke und Gewebe (Spalt-) Leder, Matrizen (z.B. Verloursleder-Silicon-Matritzen), oder Zwischenträger (z.B. Trennpapiere) unter Bildung von Beschichtungen oder Zurichtungen aufgebracht und gegebenenfalls nach weiteren Handhabungs- oder technischen Verarbeitungsschritten bei erhöhter Temperatur verfestigt werden.

Bei Mitverwendung von Treibmitteln können zellige Polyurethane hergestellt werden, die gegebenenfalls eine integrale Dichtestruktur aufweisen.

Auch durch Tauchverfahren können Oberflächenbeschichtungen, Abdruckformen oder Formkörper hergestellt werden.

Die Mengenangaben in den Beispielen beziehen sich, sofern nicht anders angegeben, auf Gewichtsteile.

Beispiele

Beispiel 1 (Vergleichsbeispiel)

100 g eines trifunktionellen flüssigen Polypropylenglykolethers (Mol-Gew. 3.000, OH-Zahl 56) werden mit 100 g eines festen bzw. in Pulverform vorliegenden Polyesters aus Adipinsäure und Ethylenglykol (Mol-Gew. 2.000, OH-Zahl 56) vermischt. Der Ansatz wird auf ca. 50 - 60°C erwärmt. Nach kurzer Zeit erhält man eine Emulsion aus geschmolzenem Polyester im Polyether. Beide Komponenten sind nicht miteinander mischbar. Nach Zusatz von 0,1 g Pb-Octoat (Octa-Soligen Pb 24, Firma Borchers) und 34,8 g dimerem TDI (TT) wird unter Rühren 15 - 30 Minuten im Wasserstrahlvakuum entgast. Danach wird der Reaktionsansatz in eine Form gegossen und 2 - 3 Stunden bei 120°C ausgeheizt. Man beobachtet eine rasche Anfangsvernetzung, die aber nach einer gewissen Zeit einen Endpunkt erreicht. Man erhält schließlich ein nur zum Teil vernetztes Endprodukt, bei dem sich auf der Oberfläche ein deutlich sichtbarer Film von noch unverändertem Polypropylenglykolether befindet. Eine Nachvernetzung tritt auch bei höherer Temperatur nicht mehr ein.

Beispiel 2 (erfindungsgemäß)

Wird die in Beispiel 1 erwähnte Mischung aus 100 g des flüssigen Polypropylenglykolethers und 100 g des in Form eines Pulvers vorliegenden Polyesters dagegen nicht auf 50 - 60°C erwärmt, so verhält sich die Suspension nach Zugabe von Pb-Octoat und dimerem TDI (TT) anders. Wird diese Mischung nun auf 120 - 130°C erwärmt, so erhält man nach 2 - 3 Stunden ein völlig durchvernetztes Formteil mit glatter homogener Oberfläche.

Beispiel 3

Zu 100 g eines trifunktionellen Polypropylenglykolethers (Mol-Gew- 3.000, OH-Zahl 56) werden 0,1 g Pb-Octoat und 0,15 g LAROMIN C (Bis-(3-methyl-4-aminocyclohexyl)-methan der Firma BASF) zugesetzt. Danach werden 100 g eines in pulvriger Form vorliegenden $NH_2$-Endgruppen enthaltenden Polyesters (NH-Zahl 48), hergestellt gemäß EP-AS 0 219 035, durch alkalische Hydrolyse eines Voradduktes aus 1 Mol Polyadipat (Veresterungsalkohol:Ethylenglykol und 1,4-Butandiol) und 2 Mol 2,4-Diisocyanatotoluol (TDI) mit obiger Polyether-Komponente homogen vermischt. Hierbei darf die Temperatur die Schmelz- bzw. Erwei-

8

chungstemperatur des Polyesters nicht überschreiten. Nach weiterem Zusatz von 32,5 g dimerem TDI erhält man eine flüssige und gut gießbare Suspension, die infolge der Diffusions-Sperrschicht auf der Oberfläche der TT-Teilchen (Polyharnstoffhülle durch Reaktion von Laromin mit TT) eine beliebig lange Lagerstabilität bei Raumtemperatur aufweist. Der Reaktionsansatz wird nun im Wasserstrahlvakuum entgast und in eine geeignete und mit Trennmittel versehene Form gegossen. Die Verfestigung des Ansatzes erfolgt bei einer Temperatur von 120 - 130 °C, wonach nach ca. 1 Stunde der Formling aus dem Werkzeug genommen werden kann. Nach einer weiteren Temperphase von 2 - 3 Stunden bei 120 °C erhält man ein homogenes Elastomer mit folgenden mechanischen Eigenschaften:

| | |
|---|---|
| **Modul (100 %)/MPa** | **7,5** |
| **Zugfestigkeit/MPa** | **22,0** |
| **Bruchdehnung/%** | **500** |
| **Weiterreißfestigkeit/KN/m** | **34,5** |
| **Elastizität/%** | **52** |
| **Härte/Shore A** | **86** |

Wird dagegen das Reaktionsgemisch vor der Verfestigung auf eine Temperatur gebracht, die oberhalb des Schmelzpunktes der $NH_2$-Endgruppen enthaltenden Komponente liegt, bilden sich rasch zwei nicht miteinander mischbare flüssige Phasen, die sich alsbald separieren. Die nachträgliche Vernetzung bei 120 - 130 °C führt dann zu einem inhomogenen und nur zum Teil vernetzten Produkt, das zudem noch eine ölige Schicht des PPG-Ethers auf der Oberfläche des Formlings aufweist. Solche Produkte sind für Beschichtungsmaterialien oder Klebstoffe, bei denen gute Haftung zum Untergrund erforderlich sind, völlig unbrauchbar.

Beispiele 4 bis 6

Allgemeine Arbeitsvorschrift zur Herstellung eines Klebstoffes mit OH-funktionellen, pulverförmigen Füllstoffen:

Zu einer Suspension eines retardierten Polyisocyanates im Gemisch von niedermolekularen Polyhydroxy- und/oder Polyaminoverbindungen mit einer Viskosität (gemessen gemäß DIN 53 019 bei Raumtemperatur) von 0,1 bis 250 Pa.s, bevorzugt 1 bis 10 Pa.s, werden bei Raumtemperatur oder mäßig erhöhter Temperatur < 50 °C unter fortgesetztem Rühren die vorgegebenen Anteile des feinvermahlenen Polymeren gegeben, bis eine makroskopisch homogene Masse entstanden ist.

Zur Herstellung größerer Mengen der erfindungsgemäßen Mischungen sind Rühr- und Mischwerkzeuge mit rotierenden Rührorganen wie z.B. Anker- oder Wendelrührer oder auch Z- oder Sigma-Kneter geeignet.

Applikation der erfindungsgemäßen Mischungen als Klebstoffe, allgemeines Verfahren

Die erfindungsgemäßen Mischungen werden bei Temperaturen <50 °C, bevorzugt bei Raumtemperatur, auf eines oder beide der zu verbindenden Teile aufgebracht.

Wenn es die Reaktivität und Thermostabilität der Mischungen zuläßt, sind auch Applikationstemperaturen >50 °C gestattet.

Ausführung der Verklebungen

4 mm starke SMC-Plättchen SMC 109 (Bayer AG, Leverkusen) von 20 mm Breite und 40 mm Länge werden mit 10 mm Überlappung verklebt, indem man ein SMC-Plättchen auf dieser Überlappungsfläche mit dem erfindungsgemäßen Gemisch beschichtet und das zweite, gegebenenfalls nicht beschichtete Plättchen mit der angegebenen Überlappung darauf legt. Ein drittes SMC-Plättchen mit gleichen Abmessungen wird als Widerlager und als Fixierhilfe zur Vermeidung von Überlappungsveränderungen bei der Aushärtung verwendet. Ein auf diesem dritten SMC-Plättchen liegendes Distanzblech von 200 µm bewirkt als Zwischenlage zwischen Widerlager und aufgelegtem SMC-Plättchen eine konstante Klebfugendicke von 200 µ.

Charakteristik des Bruchtyps der Klebfuge

Als A-Bruch wird derjenige Bruchtyp bezeichnet, bei welchem die Separation an der Phasengrenze Klebstoff/Fügeteil auftritt.

K-Bruch bedeutet Separation innerhalb der Klebfuge.

MA (Materialbruch) bedeutet Versagen des Fügeteilwerkstoffs bei Zugscherprüfung.

Aushärtung der Klebfugen

Zur Erzeugung der endgültigen Verbundfestigkeiten ist Wärmezufuhr erforderlich. Darunter ist die Erhöhung der Temperatur in der Klebfuge und die Überschreitung einer Mindest-Temperatur für eine bestimmte Dauer, in der Regel 10 sec bis 60 min, bevorzugt 30 sec bis 20 min, zu verstehen. Die Temperatur und die Erhitzungsdauer richten sich nach der vom Anwender vorgegebenen Rezeptur und dem Fügeteilwerkstoff.

In jedem Falle aber ist für den vorgegebenen Aushärtungszeitraum eine Temperatur über der rezepturspezifischen "Aufdicktemperatur" des retardierten Polyisocyanates nach der Lehre der DE-A 3 403 499 vorzugeben.

**Beispiel-Rezepturen für 1K-PU-Klebstoffe mit Zusatz von OH-funktionellen, pulverförmigen Füllstoffen:**

|  | Bsp.4 [Gew%] | Bsp.5 [Gew%] | Bsp.6 [Gew%] |
|---|---|---|---|
| Auf 2,2-Bis-(4-hydroxyphenyl)-propan gestartetes Polyoxypropylenether-Diamin, $M_w$ 1.000 | 22,0 | 21,3 | 20,0 |
| Auf 2,2-Bis-(4-hydroxyphenyl)-propan gestartetes Polyoxypropylenetherdiol, $M_w$ 550 | 29,0 | 27,8 | 26,2 |
| 2,4-Diamino-3,5-diethyltoluol | 2,5 | 2,5 | 2,4 |
| Dimeres TDI | 36,0 | 36,0 | 36,0 |
| Pb-Octoat | 0,2 | 0,2 | 0,2 |
| 4,4'-Diamino-3,3'-dimethyl-dicyclohexylmethan | 0,2 | 0,2 | 0,2 |
| Hydroxypolyester mit OHZ ca. 50 und Schmelzpunkt ca. 100° C | 9,9 | 12,0 | 15,0 |
| Zugscherfestigkeit SMC/SMC nach Aushärtung 30 min 130° C in Anlehnung an DIN 53 283, Mittelwert aus 5 Messungen | 10,25 N/mm² | 9,6 N/mm² | 9,35 N/mm² |
| Heat failure SMC/SMC in Anlehnung an ASTM D 4498 | 181° C | 186° C | 188° C |

10

EP 0 431 414 B1

**Patentansprüche**

**Patentansprüche für folgende Vertragsstaaten : AT, BE, CH, DE, FR, GB, IT, LI, NL, SE**

1. Gemische bestehend aus

    A. Feststoff-Polyisocyanaten mit Schmelzpunkten oberhalb 80°C,

    B. linearen oder verzweigten und bei Raumtemperatur flüssigen OH- und/oder $NH_2$-Endgruppen enthaltenden Polyoxyalkylenethern, mit Molekulargewichten zwischen 400 und 6.000,

    C. linearen oder verzweigten und bei Raumtemperatur festen OH- und/oder $NH_2$-Endgruppen enthaltenden Polyestern mit Molekulargewichten zwischen 400 und 20.000,

    D. gegebenenfalls OH- und/oder $NH_2$-Gruppen enthaltenden niedermolekularen Kettenverlängerern vom Molekulargewicht 62 - 399,

    E. gegebenenfalls in der PUR-Chemie üblichen Katalysatoren und anderen Hilfsstoffen,

    dadurch gekennzeichnet, daß die bei Raumtemperatur feste, in Form von feinteiligen Pulvern in Teilchengrößen von 10 bis 200 $\mu$m vorliegende Polyesterkomponente (C) mit dem Polyether (B) nicht homogen (einphasig) mischbar ist.

2. Gemische gemäß Anspruch 1, dadurch gekennzeichnet, daß sie als Feststoff-Polyisocyanat dimeres TDI (TT) oder das aus 2 Mol TDI und 1 Mol Wasser herstellbare TDI-Harnstoffdiisocyanat (TDIH) mit einer Teilchengröße von 0,1 bis 150 $\mu$m enthalten.

3. Gemische gemäß einem der Ansprüche 1 und 2, dadurch dadurch gekennzeichnet, daß sie bei Raumtemperatur in fester Form vorliegende Polyester mit Erweichungspunkten von 40 bis 150°C enthalten.

4. Gemische gemäß einem der Ansprüche 1 bis 3, dadurch gekennzeichnet, daß die Polyester in Form von feinteiligen Pulvern in Teilchengrößen von 20 bis 100 $\mu$m in dem Reaktionsgemisch vorliegen.

5. Verwendung der Gemische gemäß einem der Ansprüche 1 bis 4 zur Herstellung von Elastomeren, Beschichtungs-, Dichtungs- und Klebstoffmassen.

**Patentansprüche für folgenden Vertragsstaat : ES**

1. Verfahren zur Herstellung von Elastomeren, Beschichtungen, Dichtungen oder Verklebungen, dadurch gekennzeichnet, daß man Gemische, bestehend aus

    A. Feststoff-Polyisocyanaten mit Schmelzpunkten oberhalb 80°C,

    B. linearen oder verzweigten und bei Raumtemperatur flüssigen OH- und/oder $NH_2$-Endgruppen enthaltenden Polyoxyalkylenethern, mit Molekulargewichten zwischen 400 und 6.000,

    C. linearen oder verzweigten und bei Raumtemperatur festen OH- und/oder $NH_2$-Endgruppen enthaltenden Polyestern mit Molekulargewichten zwischen 400 und 20.000,

    D. gegebenenfalls OH- und/oder $NH_2$-Gruppen enthaltenden niedermolekularen Kettenverlängerern vom Molekulargewicht 62 - 399,

    E. gegebenenfalls in der PUR-Chemie üblichen Katalysatoren und anderen Hilfsstoffen,

    wobei die bei Raumtemperatur feste, in Form von feinteiligen Pulvern in Teilchengrößen von 10 bis 200 $\mu$m vorliegende Polyesterkomponente (C) mit dem Polyether (B) nicht homogen (einphasig) mischbar ist, bei Temperaturen oberhalb Raumtemperatur härtet.

2. Verfahren gemäß Anspruch 1, dadurch gekennzeichnet, daß sie als Feststoff-Polyisocyanat dimeres TDI (TT) oder das aus 2 Mol TDI und 1 Mol Wasser herstellbare TDI-Harnstoffdiisocyanat (TDIH) mit einer Teilchengröße von 0,1 bis 150 $\mu$m enthalten.

3. Verfahren gemäß einem der Ansprüche 1 und 2, dadurch gekennzeichnet, daß sie bei Raumtemperatur in fester Form vorliegende Polyester mit Erweichungspunkten von 40 bis 150°C enthalten.

4. Verfahren gemäß einem der Ansprüche 1 bis 3, dadurch gekennzeichnet, daß die Polyester in Form von feinteiligen Pulvern in Teilchengrößen von 20 bis 100 $\mu$m in dem Reaktionsgemisch vorliegen.

5. Verfahren gemäß einem der Ansprüche 1 bis 4, dadurch gekennzeichnet, daß die Härtung bei Temperaturen von 100 bis 150°C durchgeführt wird.

11

**Claims**

**Claims for the following Contracting States : AT, BE, CH, DE, FR, GB, IT, LI, NL, SE**

1. Mixtures consisting of

    A. solid isocyanates having melting points above 80 °C,

    B. linear or branched OH- and/or $NH_2$-terminated polyoxyalkylene ethers with molecular weights of 400 to 6,000 which are liquid at room temperature,

    C. linear or branched OH- and/or $NH_2$-terminated polyesters with molecular weights of 400 to 20,000 which are solid at room temperature,

    D. optionally, low molecular weight chain-extending agents containing OH and/or $NH_2$ groups and having a molecular weight of 62 to 399,

    E. optionally, catalysts and other auxiliaries typically used in PUR chemistry,

    characterized in that the polyester component (C) solid at room temperature, which is present in the form of fine-particle powders in particle sizes of 10 to 200 $\mu$m, is not miscible homogeneously (in one phase) with the polyether (B).

2. Mixtures as claimed in claim 1, characterized in that they contain dimeric TDI (TT) or the TDI urea diisocyanate (TDIH) obtainable from 2 mol TDI and 1 mol water with a particle size of 0.1 to 150 $\mu$m as the solid polyisocyanate.

3. Mixtures as claimed in any claim 1 or 2, characterized in that they contain polyesters solid at room temperature with softening points of 40 to 150 °C.

4. Mixtures as claimed in any of claims 1 to 3, characterized in that the polyesters are present in the reaction mixture in the form of fine-particle powders with particle sizes of 20 to 100 $\mu$m.

5. The use of the mixtures claimed in any of claims 1 to 4 for the production of elastomers, coating compounds, sealing compounds and adhesives.

**Claims for the following Contracting State : ES**

1. A process for the production of elastomers, coatings, seals or bonds, characterized in that mixtures consisting of

    A. solid isocyanates having melting points above 80 °C,

    B. linear or branched OH- and/or $NH_2$-terminated polyoxyalkylene ethers with molecular weights of 400 to 6,000 which are liquid at room temperature,

    C. linear or branched OH- and/or $NH_2$-terminated polyesters with molecular weights of 400 to 20,000 which are solid at room temperature,

    D. optionally, low molecular weight chain-extending agents containing OH and/or $NH_2$ groups and having a molecular weight of 62 to 399,

    E. optionally, catalysts and other auxiliaries typically used in PUR chemistry,

    the polyester component (C) solid at room temperature, which is present in the form of fine-particle powders in particle sizes of 10 to 200 $\mu$m, being immiscible homogeneously (in one phase) with the polyether (B),

    are cured at temperatures above room temperature.

2. A process as claimed in claim 1, characterized in that they contain dimeric TDI (TT) or the TDI urea diisocyanate (TDIH) obtainable from 2 mol TDI and 1 mol water with a particle size of 0.1 to 150 $\mu$m as the solid polyisocyanate.

3. A process as claimed in claim 1 or 2, characterized in that they contain polyesters solid at room temperature with softening points of 40 to 150 °C.

4. A process as claimed in any of claims 1 to 3, characterized in that the polyesters are present in the reaction mixture in the form of fine-particle powders with particle sizes of 20 to 100 $\mu$m.

5. A process as claimed in any of claims 1 to 4, characterized in that curing is carried out at temperatures of 100 to 150 °C.

**Revendications**
**Revendications pour les Etats contractants suivants : AT, BE, CH, DE, FR, GB, IT, LI, NL, SE**

1.  Mélanges constitués par
    A. des polyisocyanates solides à points de fusion supérieurs à 80°C,
    B. des éthers de polyoxyalkylènes linéaires ou ramifiés et liquides à la température ambiante, contenant des groupes terminaux OH et/ou $NH_2$, possédant des poids moléculaires entre 400 et 6.000,
    C. des polyesters linéaires ou ramifiés et solides à la température ambiante, contenant des groupes terminaux OH et/ou $NH_2$, possédant des poids moléculaires entre 400 et 20.000,
    D. éventuellement des agents d'allongement de chaînes à bas poids moléculaires contenant des groupes OH et/ou $NH_2$, d'un poids moléculaire de 62-399,
    E. éventuellement des catalyseurs et d'autres substances auxiliaires habituels dans la chimie des PUR,
    caractérisés en ce que le composant de polyester (C) solide à la température ambiante, présent sous forme de poudres à grains fins dans des granulométries de 10 à 200 $\mu$m, ne peut être mélangé de manière homogène (monophasique) avec le polyéther (B).

2.  Mélanges selon la revendication 1, caractérisés en ce qu'ils contiennent, à titre de polyisocyanate solide, du TDI dimère (TT) ou le TDI-urée-diisocyanate (TDIH) que l'on peut préparer à partir de 2 moles de TDI et de 1 mole d'eau avec une granulométrie de 0,1 à 150 $\mu$m.

3.  Mélanges selon l'une quelconque des revendications 1 et 2, caractérisés en ce qu'ils contiennent des polyesters présents sous forme solide à la température ambiante avec des points de ramollissement de 40 à 150°C.

4.  Mélanges selon la revendication 1 à 3, caractérisés en ce que les polyesters sont présents dans le mélange réactionnel sous forme de poudres à grains fins dans des granulométries de 20 à 100 $\mu$m.

5.  Utilisation des mélanges selon l'une quelconque des revendications 1 à 4, pour la fabrication d'élastomères, de matières d'enduction et d'étanchéité, et d'adhésifs.

**Revendications pour l'Etat contractant suivant : ES**

1.  Procédé pour la préparation d'élastomères, d'enductions, d'agents d'étanchéification ou d'adhésifs, caractérisé en ce qu'on durcit, à des températures supérieures à la température ambiante, des mélanges constitués par
    A. des polyisocyanates solides à points de fusion supérieurs à 80°C,
    B. des éthers de polyoxyalkylènes linéaires ou ramifiés et liquides à la température ambiante, contenant des groupes terminaux OH et/ou $NH_2$, possédant des poids moléculaires entre 400 et 6.000,
    C. des polyesters linéaires ou ramifiés et solides à la température ambiante, contenant des groupes terminaux OH et/ou $NH_2$, possédant des poids moléculaires entre 400 et 20.000,
    D. éventuellement des agents d'allongement de chaînes à bas poids moléculaire contenant des groupes OH et/ou $NH_2$, d'un poids moléculaire de 62-399,
    E. éventuellement des catalyseurs et d'autres substances auxiliaires habituels dans la chimie des PUR,
    dans lequel le composant de polyester (C) solide à la température ambiante, présent sous forme de poudres à grains fins dans des granulométries de 10 à 200 $\mu$m, ne peut être mélangé de manière homogène (monophasique) avec le polyéther (B).

2.  Procédé selon la revendication 1, caractérisé en ce que les mélanges contiennent, à titre de polyisocyanate solide, du TDI dimère (TT) ou le TDI-urée-diisocyanate (TDIH) que l'on peut préparer à partir de 2 moles de TDI et de 1 mole d'eau avec une granulométrie de 0,1 à 150 $\mu$m.

3.  Procédé selon l'une quelconque des revendications 1 et 2, caractérisé en ce qu'ils contiennent des polyesters présents sous forme solide à la température ambiante avec des points de ramollissement de 40 à 150°C.

4. Procédé selon l'une quelconque des revendications 1 à 3, caractérisé en ce que les polyesters sont présents dans le mélange réactionnel sous forme de poudres à grains fins dans des granulométries de 20 à 100 μm.

5. Procédé selon l'une quelconque des revendications 1 à 4, caractérisé en ce que le durcissement a lieu à des températures de 100 à 150°C.